(19) Europäisches Patentamt
European Patent Office
Office européen des brevets

(11) EP 1 005 890 B1

(12) # EUROPÄISCHE PATENTSCHRIFT

(45) Veröffentlichungstag und Bekanntmachung des Hinweises auf die Patenterteilung:
**19.06.2002 Patentblatt 2002/25**

(51) Int Cl.[7]: **B01D 19/04**, C11D 3/00

(21) Anmeldenummer: **99123227.3**

(22) Anmeldetag: **25.11.1999**

(54) **Polyester enthaltende Siliconentschäumerzusammensetzungen**

Silicone defoaming compositions containing polyester

Compositions anti-mousse à base de silicone contenant du polyester

(84) Benannte Vertragsstaaten:
**DE FR GB IT**

(30) Priorität: **02.12.1998 DE 19855610**

(43) Veröffentlichungstag der Anmeldung:
**07.06.2000 Patentblatt 2000/23**

(73) Patentinhaber: **Wacker-Chemie GmbH**
**81737 München (DE)**

(72) Erfinder:
- **Innertsberger, Ernst**
**84489 Burghausen (DE)**
- **Siegl, Herbert**
**84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**WO-A-97/02337**
**DE-A- 4 404 202**
**GB-A- 1 377 092**
**US-A- 3 705 859**
**US-A- 4 919 843**

EP 1 005 890 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Polyester enthaltende Siliconent schäumer zusammensetzungen.

Entschäumer auf Siliconbasis sind beispielsweise in US-A-4,919,843 beschrieben. Diese entfalten eine gute Wirkung in Wasch- und Reinigungsmitteln. Jedoch nimmt die Antischaumwirkung bei der Lagerung, insbesondere bei alkalisch eingestellten Wasch- und Reinigungsmitteln, deutlich ab.

Es bestand die Aufgabe, Entschäumerzusammensetzungen bereitzustellen, die eine hohe Lagerbeständigkeit aufweisen.

Gegenstand der Erfindung sind Entschäumerzusammensetzungen, welche die Bestandteile Organopolysiloxan (A) und bezogen auf 100 Gewichtsteile Organopolysiloxan (A) 1 bis 1000 Gewichtsteile an Polyester (B) der allgemeinen Formel (I)

$$R^1\text{-}(OR^2)_m\text{-}O\text{-}[CO\text{-}R^3\text{-}CO\text{-}(R^4\text{-}O)_n]_o\text{-}(CO\text{-}R^3\text{-}CO\text{-}R^5\text{-}O]_p$$

$$\text{-}CO\text{-}R^3\text{-}CO\text{-}O\text{-}(R^6\text{-}O)_q\text{-}R^7 \qquad (I),$$

in der

| | |
|---|---|
| $R^1$ und $R^7$ | jeweils Wasserstoff oder einen $C_1$- bis $C_{18}$-Alkylrest, |
| $R^2$, $R^4$, $R^5$ und $R^6$ | jeweils einen $C_2$- bis $C_4$-Alkylenrest, |
| $R^3$ | einen o-, m- oder p-Phenylenrest, |
| m und q | jeweils ganzzahlige Werte von 3 bis 500, |
| n | ganzzahlige Werte von 10 bis 140, |
| o | ganzzahlige Werte von 0 bis 12 und |
| p | ganzzahlige Werte von 7 bis 40 bedeuten, |

umfassen.

Bei diesen Entschäumerzusammensetzungen nimmt die Antischaumwirkung bei der Lagerung nur sehr langsam ab. Dadurch kann die Entschäumerzusammensetzungen erheblich sicherer für ein günstiges Schaumniveau sorgen und niedriger dosiert werden.

Auch wirkt Polyester (B) als sehr geeignetes Dispergiermittel für die Entschäumerzusammensetzung. Gerade die gute Dispergierung eines Entschäumers ist ein sehr wichtiger Gesichtspunkt bei Entschäumungsprozessen, da man dort immer gewährleisten muß, daß die zumeist relativ hydrophobe Entschäumerzusammensetzung ohne Wirkungseinbuße gut dispergiert und keine Siliconflecken auf Geweben oder Siliconränder auf harten Oberflächen, wie Behälterwandungen, beispielsweise an Waschmaschinengehäusen etc. hinterläßt. Andererseits darf keine Überdispergierung erfolgen, welche die Entschäumerzusammensetzung zu fein dispergiert, so daß sie nicht mehr oberflächenorientiert auf den Schaumlamellen ihre Wirkung ausreichend entfalten kann.

Gleichzeitig bewirken Polyester (B), die bei einem Waschvorgang aus dem Waschmittel auf Gewebe aufgebracht worden sind, daß insbesonders öliger Schmutz nicht so stark in das Gewebe migriert und bei einer weiteren Wäsche wesentlich leichter abgelöst wird, insbesondere bei Anwesenheit von Polyestergeweben im Waschgut. Dies kann beispielsweise durch Messung der sogenannten Remission festgestellt werden. Diese schmutzabweisende Wirkung ist in der GB-A-1377092 beschrieben.

Beispiele für die Alkylreste $\mathbf{R^1}$ und $\mathbf{R^7}$ sind nachstehend für die Reste **R** und **R'** aufgeführt. Vorzugsweise bedeuten jeweils unabhängig voneinander $\mathbf{R^1}$ und $\mathbf{R^7}$ Wasserstoff oder einen $C_1$- bis $C_4$-Alkylrest, $\mathbf{R^2}$, $\mathbf{R^4}$, $\mathbf{R^5}$ und $\mathbf{R^6}$ einen Ethylen- oder 1,2-Propylenrest, $\mathbf{R^3}$ einen p-Phenylenrest, **m** und **q** ganzzahlige Werte von 3 bis 45, **n** ganzzahlige Werte von 15 bis 70, **o** ganzzahlige Werte von 0 bis 5, **p** ganzzahlige Werte von 8 bis 12 und die Summe **o+p** ganzzahlige Werte von 12 bis 35.

Bezogen auf 100 Gewichtsteile Organopolysiloxan (A) werden 1 bis 1000 Gewichtsteile an Polyester (B), insbesondere 20 bis 400, besonders bevorzugt 60 bis 150 Gewichtsteile an Polyester (B) eingesetzt.

Vorzugsweise ist das Organopolysiloxan (A) aus Einheiten der allgemeinen Formeln (II) bis (VIII)

$$R_3SiO_{1/2} \quad (II),$$

$$R_2SiO \quad (III),$$

$$RSiO_{3/2} \quad (IV),$$

$$SiO_{4/2} \quad (V),$$

$$R_2(R'O)SiO_{1/2} \quad (VI),$$

$$R(R'O)SiO \quad (VII),$$

$$R'ORSiO_{3/2} \quad (VIII),$$

aufgebaut, worin

**R** einwertige, gegebenenfalls mit Halogenatomen, Cyano-, Amino-, Alkylamino-, quaternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 18 Kohlenstoffatomen und

**R'** einwertige, gegebenenfalls mit Halogenatomen, Cyano-, Amino-, Alkylamino-, quaternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 30 Kohlenstoffatomen und Wasserstoffatome bedeuten.

Beispiele für Kohlenwasserstoffreste **R** und **R'** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest ;
Dodecylreste, wie der n-Dodecylrest und iso-Dodecylrest; Octadecylreste, wie der n-Octadecylrest; Alkenylreste, wie der Vinyl-, Allyl- und der 5-Hexen-1-ylrest; Cycloalkylreste, wie Cyclopentyl-, Cyclohexyl-, Cycloheptylreste und Methylcyclohexylreste; Arylreste, wie der Phenyl-, Naphthylund Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Reste **R** und **R'** sind Cyanalkylreste, wie der β-Cyanethylrest, und mit Fluor, Chlor oder Bromatomen halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, mund p-Chlorphenylrest.

Vorzugsweise sind mindestens 90 Mol-% der Reste **R** Methyl-, Ethyl- oder Phenylreste, insbesondere Methylreste.

Beispiele für die durch Polyoxyalkylengruppen substituierten Reste **R** und **R'** sind die Reste der allgemeinen Formel (IX)

$$-R^8-[O(CR_2{}^9)_c]_dOR^9 \quad (IX),$$

in der

**R⁸** einen zweiwertigen $C_1$- bis $C_6$-Alkylenrest,
**R⁹** Wasserstoffatome oder einwertige $C_1$- bis $C_6$-Kohlenwasserstoffreste,
**c** die Werte 0, 1, 2, 3, 4 oder 5, vorzugsweise 2 oder 3 und
**d** ganzzahlige Werte von 1 bis 100, vorzugsweise 1 bis 10 bedeuten.

Beispiele für die zweiwertigen Reste $\mathbf{R^8}$ sind gesättigte geradoder verzweigtkettige oder cyclische Alkylenreste wie der Methylen- und Ethylenrest sowie Propylen-, Butylen-, Pentylen-, Hexylen-, 2-Methylpropylen-, Cyclohexylenreste, oder ungesättigte Alkylenreste wie der Propenylen- und Hexenylenrest.

Beispiele für die einwertigen Reste $\mathbf{R^9}$sind bei den vorstehenden Beispielen für **R** und **R'** aufgeführt.

Weitere Beispiele für die durch Polyoxyalkylengruppen substituierten Reste **R** und **R'** sind die Reste der allgemeinen Formel (X)

$$\begin{array}{l} -C-[O(CR_2^9)_c]_dOR^9 \\ \;\;\| \\ H-C-[O(CR_2^9)_c]_dOR^9 \end{array} \qquad (X),$$

worin $\mathbf{R^9}$, **c** und **d** die vorstehend für die allgemeine Formel (IX) angegebenen Bedeutungen aufweisen.

Bevorzugte mit Alkylaminoresten substituierte Reste **R** und **R'** sind die Reste der allgemeinen Formel (XI)

$$R^{10}{}_2NR^{11}- \qquad (XI),$$

worin

$\mathbf{R^{10}}$ gleich oder verschieden sein kann und Wasserstoff oder einwertigen, gegebenenfalls halogensubstituierten $C_1$-$C_{10}$-Alkylrest oder $C_1$-$C_{10}$-Aminoalkylrest und

$\mathbf{R^{11}}$ einen zweiwertigen $C_1$-$C_{15}$-Kohlenwasserstoffrest bedeuten.

Beispiele für Rest $\mathbf{R^{10}}$ sind die für Rest **R** gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (XI) mindestens ein Wasserstoffatom gebunden.

Bevorzugt handelt es sich bei Rest $\mathbf{R^{11}}$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $\mathbf{R^{11}}$ sind der Methylen-, Ethylen-, Propylen-, Butylen-, Cyclohexylen-, Octadecylen-, Phenylen- und Butenylenrest.

Vorzugsweise weisen höchstens 20 Mol-% der Einheiten des Organopolysiloxans (A) die allgemeinen Formeln (VI) bis (VIII) auf.

Vorzugsweise enthält das Organopolysiloxan (A) mindestens 50 Gew.-%, insbesondere mindestens 80 Gew.-% Organopolysiloxane (A1), welche zu mindestens 90 Mol-%, insbesondere 95 Mol-% aus Einheiten der allgemeinen Formel (III) bestehen. Dabei weisen vorzugsweise mindestens 50 Mol-% der restlichen Einheiten die allgemeinen Formeln (II) und (VI) auf. Weiterhin ist bevorzugt, daß Organopolysiloxan (A1) eine durchschnittliche Viskosität von 50 bis 500 000 mPa.s, insbesondere von 350 bis 60 000 mPa.s bei 25°C aufweist.

Vorzugsweise enthält das Organopolysiloxan (A) mindestens 0,5 Gew.-%, insbesondere mindestens 2 Gew.-% und vorzugsweise höchstens 40 Gew.-% Organopolysiloxanharze (A2), welche zu mindestens 90 Mol-%, insbesondere 95 Mol-% aus Einheiten der allgemeinen Formeln (II) und (IV), und gegebenenfalls (V) und (VI) bestehen. Beispielsweise können die Organopolysiloxanharze (A2) bei Raumtemperatur fest sein und 0,25 bis 1,25 Einheiten der allgemeinen Formel (II) pro Einheit der allgemeinen Formel (IV) aufweisen.

Diese bevorzugten Organopolysiloxanharze (A2) können, bedingt durch ihre Herstellung, bis zu insgesamt 5 Gew.-% Si-gebundene Alkoxyreste oder Hydroxylgruppen enthalten. Die Organopolysiloxanharze (A2) sind in der Regel mit Polydimethylsiloxanen nicht vollständig mischbar.

Die Entschäumerzusammensetzung kann weiterhin noch Füllstoffe (C) enthalten. Beispiele für Füllstoffe (C) sind hydrophile und hydrophobe Oxide von Silicium, Magnesium oder Zink, wobei diese Oxide vorzugsweise jeweils eine Oberfläche von mindestens 50 $m^2/g$ aufweisen, Salze von Elementen der II. oder III. Gruppe des Periodensystems nach Mendeleieff mit einer Ordnungszahl von 12 bis 30 mit 12 bis 22 Kohlenstoffatome je Molekül aufweisenden, aliphatischen einbasigen Carbonsäuren oder Hydroxycarbonsäuren, wie Calciumstearat oder Calcium-12-hydroxystearat. Weitere Beispiele für Füllstoffe (C) sind Lithiumstearat, Magnesiumsilikat und Magnesiumaluminiumsilikat. Ferner können als Füllstoffe auch feindisperse Polyurethane und auch Bisamide vorliegen, insbesonders Umsetzprodukte aus Fettsäuren und Alkylendiamiden mit 2 - 7 C-Atomen. Besonders bevorzugt ist pyrogen erzeugtes oder gefälltes insbesondere hydrophobiertes Siliciumdioxyd mit einer Oberfläche von mindestens 50 $m^2/g$ (hochdisperse Kie-

selsäure).

Die Entschäumerzusammensetzungen kann eine Art von Füllstoff oder Gemische aus mindestens zwei verschiedenen Arten von ·Füllstoffen enthalten. Der Anteil von Füllstoff (C) beträgt vorzugsweise bis zu 20 Gewichtsteile, insbesondere 2 bis 8 Gewichtsteile pro 100 Gewichtsteile Organopolysiloxan (A).

Die Entschäumerzusammensetzungen können beispielsweise unverdünnt, in Form von Lösungen, Emulsionen oder in Form von Pulvern eingesetzt werden. Es können auch selbstemulgierende Entschäumerzusammensetzungen eingesetzt werden. Die Entschäumerzusammensetzungen können mit organischen Entschäumerformulierungen kombiniert formuliert bzw. kombiniert eingesetzt werden.

Insbesondere für den Einsatz in Flüssigwaschmitteln werden die Entschäumerzusammensetzungen häufig mit Lösevermittlern (D) versetzt oder mit Tensiden (E) zur Herstellung von Emulsionen versetzt.

Lösevermittler (D) dient beispielsweise dazu, die Entschäumerzusammensetzungen gegebenenfalls auf eine geeignete Viskosität einzustellen oder die Verträglichkeit von Organopolysiloxan (A) und Polyester (B) untereinander und gegebenfalls gegenüber einem Flüssigwaschmittel anzupassen oder ganz allgemein Nicht-Pulver-Produkte auf Basis von Organopolysiloxan (A) und Polyester (B) zu formulieren. Der Lösevermittler (D) kann auch selbst als Lösemittel fungieren.

Wenn Lösevermittler (D) verwendet wird, werden vorzugsweise bezogen auf 100 Gewichtsteile Organopolysiloxan (A) 1 bis 1000 Gewichtsteile, insbesondere 40 bis 250, Gewichtsteile an Lösevermittler (D) eingesetzt.

Wenn die Entschäumerzusammensetzung in Form einer Emulsion eingesetzt wird, können beliebige für Silicon-Emulsionen geeignete Tenside (E) verwendet werden. Es können auch Gemische mehrerer Tenside eingesetzt werden. Bevorzugte Tenside (E) sind solche vom Typ der Alkylpolyglucoside APG, Siliconpolyglucoside und $C_{12}$ -$C_{18}$-Alkylpolyglykolether sowie Alkali-Alkylsulfate.

Der Anteil der Tenside (E) beträgt vorzugsweise höchstens 50, insbesondere 1 bis 20 Gew.-Teile pro 100 Gewichtsteile Organopolysiloxan (A).

Die Entschäumerzusammensetzungen können mit oder ohne Wasserzusatz an festen, pulverformigen Trägern (F) adsorbiert bzw. in festen Trägern absorbiert werden, was ihre Formulierung als Pulver und Granulate ermöglicht. Beispiele für solche Träger (F) sind Bentonite, Zeolithe, Schichtsilikate, saugfähige Tenside; Kunststoffe, wie Polyvinylacetate, Polyacrylate und Polyvinylalkohole; Stärke, Polysaccharide, Cellulosederivate, Zitronensäure, Zitrate, Natriumcarbonat, Sulfate, wie Natriumsulfat, Phosphate, beispielsweise Natriumtripolyphosphat und Trinatriumphosphat und Kombinationen hiervon.

Die resultierenden Antischaumgranulate bzw. Antischaumpulver sind besser rieselfähig als die mit reinen Siliconcompounds beaufschlagten Pulver, die Entschäumerzusammensetzungen ohne Polyester (B) enthalten.

Antischaumgranulate bzw. Antischaumpulver haben allgemein den Nachteil, daß die am Träger (F) gebundene Entschäumerzusammensetzung, besonders bei alkalischen und insbesondere silikatischen Trägern wie z. B. Zeolithen sich nicht ausreichend vom Träger löst und so nur sehr unzureichend seine Wirkung in der Waschflotte entfalten kann.

Die Entschäumerzusammensetzungen, welche Polyester (B) enthalten, werden leicht vom Träger (F) gelöst und entfalten damit eine gute Wirkung der Entschäumerzusammensetzungen beim Waschen der verschmutzten Gewebe.

Für die Herstellung von Antischaumgranulaten bzw. Antischaumpulvern werden auf 100 Gewichtsteile Entschäumerzusammensetzung, vorzugsweise 20 000 bis 100 Gewichtsteile, insbesondere 900 bis 150 Gewichtsteile, besonders bevorzugt 500 bis 200 Gewichtsteile Träger (F) eingesetzt.

Organopolysiloxan (A), Polyester (B), Füllstoffe (C), Lösevermittler (D), Tenside (E) und Zusatzstoffe (G).

Die Entschäumerzusammensetzungen können auch als solche oder in dispergierter Form mit Verdickungsmitteln, beispielsweise Methylcellulosetypen, Carboxymethylcellulosen oder löslicher Stärke, sprühgetrocknet werden.

Als Zusatzstoffe (G) kann die Entschäumerzusammensetzung beispielsweise noch Fungizide, Bakterizide, Algicide, Biocide, Geruchsstoffe, Korrosionsinhibitoren, und, wenn auch nicht bevorzugt, organische Lösungsmittel enthalten.

Die Entschäumerzusammensetzungen werden bevorzugt in Wasch- und Reinigungsmitteln, insbesondere in Waschmitteln für Waschmaschinen eingesetzt.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Beispiel 1: Herstellung von Entschäumercompounds EC 1 und 2 (nicht erfindungsgemäß)

Entschäumercompound EC 1 wird hergestellt durch Abmischen von

85 % Polydimethylsiloxan mit 10.000 mPa.s,
5 % Alpha-Omega-$C_{20}$-Isoalkoxy-Polydimethylsiloxan mit 120 mPa.s (ca. 50 Si-Einheiten enthaltend), in welches zuvor
5 % festes sogenanntes MQ-Harz eindispergiert wurde, sodann werden
5 % hochdisperse Kieselsäure Wacker® HDK N 20 (Oberfläche 200 qm/g) homogen eingemischt und das Gemisch 3 Stunden unter mildem Rühren bei 150 °C gehalten.
Dieses Entschäumercompound weist - auf 25 °C abgekühlt - eine Viscosität von ca. 35.000 mPa.s auf. (= EC 1)

Entschäumercompound EC 2 wird hergestellt durch Abmischen von 94 % Polymethylpolypropoxysiloxan $[CH_3Si\text{-}O\text{-}(PO)_x\text{-}H]_{4\text{-}5}$.
Methyl-polypropoxy-cyclosiloxan mit x = ca. 25-35 mit 6 %Wacker® HDK H 2000.
Das Produkt ist vergleichsweise weniger hydrophob als EC 1 und weist eine Viskosität von ca. 6000 mPa.s auf und ist ein gutes Entschäumungsmittel.

Beispiel 2: Herstellung erfindungsgemäßer Entschäumerzusammensetzungen PM 1 bis 4

PM 1:
Auflösen von
25 % Polyester (B) (SRP) mit folgender Zusammensetzung bei einem Molekulargewicht von ca. 14.000 und folgenden Strukturanteilen von etwa:

7.1 Mol-% Terephthalsäure-Resten
3,3 Mol-% Polypropoxyresten (PO)an Terephthalsäure gebunden
7,9 Mol-% Polyoxyethylenoxidresten an Terephthalsäure gebunden
80,7 Mol-% Polyethylenoxidreste (EO) in Kette
1 Mol-% Methoxyreste.

Das Verhältnis aus EO:PO-Anteilen liegt bei ca. 27:1, das Verhältnis von Phthalsäurereste zu EO/PO liegt bei 1: 13. In der allgemeinen Formel (I) ist $R^1$ und $R^7$ ein Methylrest, die Indices betragen ca: m = 21, n= 40, $R^5$= $C_2$-Alkylenrest, o = 3, p = 16
in
25 % Wasser und Abmischen mit
50 % EC 1

PM 2:

45 % EC 1 werden in eine gemeinsame Lösung von
22,5 % Wasser
10 % Zitronensäure / 50 %ig und
22, 5 % Polyester (B) SRP eingerührt.

PM 3:

46 % 50 °C warmes EC 1 werden eingerührt in eine Mischung aus
18,5 % Wasser
4 % $C_{18}$-Alkylpolyglykosid (Simulsol® SL 18 von Fa. Seppic, Frankreich)
3 % TexaponK 12 (Na-Laurylsulfat von BASF AG, Ludwigshafen)
18,5 % Polyester (B)SRP und
10 % Zitronensäure / 50%ig

PM 4:

50 % EC 1,
20 % EC 2 und
30 % Polyester (B) SRP

Beispiel 3: Herstellung einer nicht erfindungsgemäßen Entschäumerzusammensetzung PM 5

Ersetzt man in PM 4 Polyester (B) durch die gleiche Menge an Paraffin, ein ebenfalls wachsartiges polymeres Produkt, so treten die Vorteile des Entschäumerschutzes beim Lagern und die bessere Rieselfähigkeit nicht auf, auch nicht die verbesserte Remission bei vor dem Waschen angeschmutztem Gewebe.

Beispiel 5: nicht erfindungsgemäße Entschäumerzusammensetzung PM 6

Verwendet man EC 1 allein ohne Polyester (B), so erreicht man die angesprochenen Effekte nicht. (PM 6 = 100 % EC 1)

Tabelle 1

| faßt die Entschäumerzusammensetzungen zusammen: | | | | | |
|---|---|---|---|---|---|
| Entschäumerzusammensetzung | EC (%) | Polyester SRP (%) | Emulgator (%) | Wasser (%) | Zusatz (%) |
| PM 1 | 50 EC 1 | 25 | - | 25 | |
| PM 2 | 45 EC 1 | 22,5 | 4 SL18<br>3 K12 | 22,5 | 10 ZS* |
| PM 3 | 46 EC 1 | 18,5 | | 18,5 | 10 ZS* |
| PM 4 | 50 EC 1<br>20 EC 2 | 30 | | | |
| PM 5** | 50 EC 1<br>20 EC 2 | 30 Paraffin | | | |
| PM 6** | 100 EC 1 | | | | |

*ZS = Zitronensäure 50 %ig

** = nicht erfindungsgemäß

Beispiel 6

Trägt man die vorgenannten Entschäumerzusammensetzungen PM 1 - 4 auf saugfähigen Zeolith Wessalith® CS von Degussa AG, Frankfurt als Träger auf, so erhält man gut rieselfähige Antischaumpulver, die eine gute Wirkungsfreisetzung und eine gute Lagerstabilität ergeben. Die Ergebnisse sind in Tabelle 2 angegeben.

Die Rieselfähigkeit wird aus Schüttwinkelmessungen nach DIN ISO 4324 erkennbar. Es wird Pulver aus einem Trichter auf eine Glasplatte gerieselt. Je flacher der Schuttwinkel/Böschungswinkel des Pulvers ist, welches sich auf der Glasplatte aufhäuft, umso rieselfähiger ist das Pulver. Bei Antischaumpulvern kann ein Schüttwinkel unter 40 Grad als günstig bezeichnet werden.

Beispiel 7

An Polyestergewebe wird durch die Anwesenheit von Polyester (B) die Remission verbessert, was an einem Testgewebe WFK 30 A des Wäschereiforschungsinstitutes Krefeld dargestellt werden kann, wobei das Testgewebe mit DMO (Dirty Motor Oil) künstlich verschmutzt und dann mit Waschmittel mit Polyester (B) enthaltender Entschäumerzusammensetzungen gewaschen wurde. Es ergibt sich eine Anstieg der Remission an Polyestergeweben um 3-6 %, was einem guten Pflegeeffekt bei Dauerbenutzung entspricht. Die Ergebnisse sind in Tabelle 2 angegeben.

Beispiel 8

Die Antischaumwirkung wird in einem Waschmittel getestet, welches in einem Miele Waschautomaten Novotronic® 918 mit einer Einsatzmenge von 130 g Waschpulver / 3,5 kg Wäsche zum Einsatz kommt. Die Waschbedingungen sind: Wäsche bei 60 °C, 3,5 kg Wäsche, 3 °dH, Waschdauer 60 Minuten. Die Schaumhöhe wird über 6 Levels angegeben, wobei für jeweils 20 Minuten eine Schaumnote vergeben wird von 0 = kein Schaum, 6 6 Maschine voll Schaum. Diese Teil-Schaumnoten über den ersten (0-20 min), zweiten (21-40 min) und dritten Waschabschnitt (41-60 min) werden addiert und als GSN (Gesamtschaumnote) für Vergleiche herangezogen. Eine Gesamtschaumnote

von > 12 gilt als unbefriedigend.

Schlechtes Loslösen der Entschäumerzusammensetzungen vom Träger oder Schädigung der Entschäumerzusammensetzungen beim Lagern führt zu erhöhten Schaumnoten u.U. bereits in den Waschabschnitten 1 oder 2. In der Regel wird eine Lagerfähigkeit des Entschäumerpulvers im Waschpulver von 6 Wochen bei 37 °C und 70 % rel. Luftfeuchte im Klimaschrank gefordert. Hierbei soll sich eine gute Schaumnote bei Versuchsbeginn nach der Lagerung nicht in eine Gesamtnote von über 12 verändern.

Das Testwaschmittel enthält:

22 % Zeolith® P (Degussa AG, Frankfurt), 21 % Natriumsulfat, 3 % Natriumdisilikat , 12 % % Natriumcarbonat, 3,5 % Natriumpolycarboxylat, 9 % Natriumalkylbenzolsulfonat, 3 % Niotensid (Isotridecylethoxylat mit 8 EO), 1,5 % Seife, 23 % Natriumperborat und 2 % Ethylendiamintetraacetat (TAED).

Ohne Zusatz an Entschäumern erreicht man damit beim Waschen Gesamtschaumnoten von 17-18, d.h. die Maschine ist voll Schaum und z.T. tritt Schaum aus dem Dispenserfach aus.

Die Ergebnisse sind in Tabelle 2 angegeben.

Tabelle 2: Entschäumergranulate; Entschäumerdosierung 1,5 % / 130 g Waschmittel und 3,5 kg Wäsche

| Teile Entschäumerzusammensetzung | Teile Träger | Teile Zusatz | Schüttwinkel /Grad | Änderung der Remission (%) | Schaumnoten vor | GSN-V = vor | Schaum-Noten nach 6 Wo. Lag. | GSN-N = nach 6 W. |
|---|---|---|---|---|---|---|---|---|
| 20 PM 1 | 80 Wess. CS | - | 31 | + 5 | 1,7+2,3 +2,8 | 6,8 | 2,3+2,6+3,0 | 7,9 |
| 22,5 PM 2 | 72 Wess. CS | 5 ZS | 31 | +4,6 | 1,4+2,5 +2,7 | 6,6 | 2,2+2,7+3,3 | 8,2 |
| 22,5 PM 3 | 72,5 CS | 5 ZS | 33 | +4 | 1,5+2,0 +2,7 | 6,2 | 1,5+3,2+4,5 | 9,2 |
| 20 PM 4 | 80 CS | | 32 | +6,3 | 1,0+2,1 +3,2 | 6,3 | 1,1+2,2+4,0 | 7,2 |
| 20 PM 5* | 80 CS | | 42 | -0,5 | 2,3+2,8 +3,2 | 8,3 | 4,0+5,3+6,0 1 Woche | 15,3 |
| 10 PM 6* | 90 CS | | 40 | -0,2 | 1,9+2,5 +3,0 | 7,4 | 4,3+5,5+6,0 1 Woche | 15,8 |

* nicht erfindungsgemäß

Beispiel 9

Das unterschiedliche Löse- bzw. Dispergierverhalten wird deutlich, wenn man die Entschäumerzusammensetzungen in Waschlauge zu dispergieren versucht. In 250 ml Bechergläsern werden die o.g. Entschäumerzusammensetzungen zu je 3 g in der Mitte des Gläser zentral eingewogen und am Boden durch ihr Eigengewicht verlaufen lassen. Die Entschäumerzusammensetzungen werden mit einer 5 %-igen 40 °C warmen konzentrierten Waschlaugenlösung, hergestellt aus dem u.g. Testwaschmittel, überschichtet und mit einem kleinen Turrax 10 Sekunden durchgemischt.

PM 6 (nicht erfindungsgemäß): Verteilt sich während des Rührens, schwimmt aber nach Abstellen des Becherglases innerhalb von 10 Minuten auf und schmiert dabei am Becherglasboden und haftet teilweise an der Becherwand ohne gute Verteilung.

PM 1: Wird in mittleren Tröpfchen vom Becherglasboden wegdispergiert und gibt erst nach 1 Stunde eine Phasentrennung aus der Waschmittellösung heraus.

PM 3: Wird in feinen Tröpfchen wegdispergiert und verteilt sich so in der Waschflotte deutlich besser als EC 1 und zeigt erst nach 3,5 Stunden eine Absonderung.

Beispiel 10

Entschäumerzusammensetzungen für Flüssigwaschmittel beinhalten keinen festen Träger, es werden jedoch mit Hilfe von Emulgatoren (E) und Lösevermittlern (D) flüssige Produkte formuliert.

30 % Premix PM 4 werden in
3 % Genapol® X 050 (Isotridecylethoxylat mit 5 Mol EO von Clariant AG, Frankfurt)
37 % Eastman® TXIB (Pentandioldiisobutyrat) und
30 % Vammar® DH 14 (Mineralölderivat von Exxon, USA)gelöst.

Diese Entschäumerzusammensetzung wird in einer Menge von 2 % einem Flüssig-Feinwaschmittel zugegeben, in welchem diese Entschäumerzusammensetzung gut verteilt bleibt. Das klare Flüssigwaschmittel enthält 3,6 % Kaliumseife, 42 % Wasser, 23 % Sec. Alkansulfonat (60 %ig), 6 % Niotensid ($C_{13}$-Ethoxylat mit 8 Ethylenoxideinheiten) und 0,2 % Zitronensäure. Das Schaumprofil bei 40 °C-Wäsche mit einer Dosierung von 80 g / 3,5 kg Wäsche und 3 °deutscher Härte ist zu Beginn mit GSN = 6,2 =(1,8+2,0+2,4) sehr günstig. Nach 6 wöchiger Lagerung liegt die Gesamtschaumnote bei 7 = (2,0+2,3+2,7 ). Die Remissionsverbesserung betrug 4,5 %.

Für nicht klare, sogenannte strukturierte, meist weiße Flüssigwaschmittel können mit Hilfe von Emulgatoren die Entschäumerzusammensetzungen PM 1 - PM 4 in Emulsionen übergeführt werden.

**Patentansprüche**

1. Entschäumerzusammensetzungen, welche die Bestandteile Organopolysiloxan (A) und bezogen auf 100 Gewichtsteile Organopolysiloxan (A) 1 bis 1000 Gewichtsteile an Polyester (B) der allgemeinen Formel (I)

$$R^1\text{-}(OR^2)_m\text{-}O\text{-}[CO\text{-}R^3\text{-}CO\text{-}(R^4\text{-}O)_n]_o\text{-}[CO\text{-}R^3\text{-}CO\text{-}R^5\text{-}O]_p$$
$$\text{-}CO\text{-}R^3\text{-}CO\text{-}O\text{-}(R^6\text{-}O)_q\text{-}R^7 \quad \text{(I)},$$

in der
**$R^1$ und $R^7$** jeweils Wasserstoff oder einen $C_1$- bis $C_{18}$-Alkylrest,
**$R^2$, $R^4$, $R^5$ und $R^6$** jeweils einen $C_2$- bis $C_4$-Alkylenrest,
**$R^3$** einen o-, m- oder p-Phenylenrest,
**m und q** jeweils ganzzahlige Werte von 3 bis 500,
**n** ganzzahlige Werte von 10 bis 140,
**o** ganzzahlige Werte von 0 bis 12 und
**p** ganzzahlige Werte von 7 bis 40 bedeuten,
umfassen.

2. Entschäumerzusammensetzungen nach Anspruch 1, bei denen das Organopolysiloxan (A) aus Einheiten der allgemeinen Formeln (II) bis (VIII)

$$R_3SiO_{1/2} \quad (II),$$

$$R_2SiO \quad (III),$$

$$RSiO_{3/2} \quad (IV),$$

$$SiO_{4/2} \quad (V),$$

$$R_2(R'O)SiO_{1/2} \quad (VI),$$

$$R(R'O)SiO \quad (VII),$$

$$R'ORSiO_{3/2} \quad (VIII),$$

aufgebaut ist, worin

**R** einwertige, gegebenenfalls mit Halogenatomen, Cyano-, Amino-, Alkylamino-, quaternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 18 Kohlenstoffatomen und
**R'** einwertige, gegebenenfalls mit Halogenatomen, Cyano-, Amino-, Alkylamino-, quaternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 30 Kohlenstoffatomen und Wasserstoffatome bedeuten.

**3.** Entschäumerzusammensetzungen nach Anspruch 1 oder 2, bei denen das Organopolysiloxan (A) 0,5 bis 40 Gew.-% Organopolysiloxanharze (A2) enthält, welche zu mindestens 90 Mol-%, aus Einheiten der allgemeinen Formeln (II), (IV), (V) und (VI) bestehen.

**4.** Pulver und Granulate, welche feste, pulverförmige Träger (F) und die Entschäumerzusammensetzungen nach Anspruch 1 bis 3 umfassen.

**5.** Wasch- und Reinigungsmittel, enthaltend die Entschäumerzusammensetzungen gemäß Anspruch 1 bis 4.

## Claims

**1.** Defoamer compositions which comprise the constituents organopolysiloxane (A) and per 100 parts by weight of organopolysiloxane (A), to 1000 parts by weight of polyester (B) of the general formula (I)

$$R^1\text{-}OR^2)_m\text{-}O\text{-}[CO\text{-}R^3\text{-}CO\text{-}(R^4\text{-}O)_n]_o\text{-}[CO\text{-}R^3\text{-}CO\text{-}R^5\text{-}O]_p$$
$$\text{-}CO\text{-}R^3\text{-}CO\text{-}O\text{-}(R^6\text{-}O)_q\text{-}R^7 \quad (I),$$

in which
$R^1$ and $R^7$ are each hydrogen or a $C_1$ to $C_{18}$ alkyl radical,
$R^2$, $R^4$, $R^5$ and $R^6$ are each a $C_2$ to $C_4$ alkylene radical,
$R^3$ is an o-, m- or p-phenylene radical,

m and q are each integer values from 3 to 500,
n is integer values from 10 to 140,
o is integer values from 0 to 12 and
p is integer values from 7 to 40.

**2.** Defoamer compositions according to Claim 1, in which organopolysiloxane (A) is built up from units of the general formulae (II) to (VIII)

$$R_3SiO_{1/2} \quad (II),$$

$$R_2SiO \quad (III),$$

$$RSiO_{3/2} \quad (IV),$$

$$SiO_{4/2} \quad (V),$$

$$R_2(R'O)SiO_{1/2} \quad (VI),$$

$$R(R'O)SiO \quad (VII),$$

$$R'ORSiO_{3/2} \quad (VIII),$$

in which

R is monovalent hydrocarbon radicals which have 1 to 18 carbon atoms and are optionally substituted by halogen atoms or cyano, amino, alkylamino, quaternary ammonium, mercapto, epoxide, anhydrido, carboxylato, sulphonato, sulphato, phosphonato, isocyanato or polyoxyalkylene groups and
R' is monovalent hydrocarbon radicals which have 1 to 30 carbon atoms and are optionally substituted by halogen atoms or cyano, amino, alkylamino, quaternary ammonium, mercapto, epoxide, anhydrido, carboxylato, sulphonato, sulphato, phosphonato, isocyanato or polyoxyalkylene groups, or hydrogen atoms.

**3.** Defoamer compositions according to Claim 1 or 2, in which organopolysiloxane (A) contains 0.5 to 40% by weight of organopolysiloxane resins (A2) which comprise units of the general formulae (II), (IV), (V) and (VI) to the extent of at least 90 mol%.

**4.** Powders and granules which comprise solid, pulverulent carriers (F) and the defoamer compositions according to Claims 1 to 3.

**5.** Detergent or cleaning compositions comprising the defoamer compositions according to Claims 1 to 4.

## Revendications

**1.** Compositions antimousses comprenant les constituants organopolysiloxane (A) et, par rapport à 100 parties en poids d'organopolysiloxane (A), de 1 à 1 000 parties en poids de polyester (B) de formule générale (I)

$$R^1\text{-}(OR^2)_m\text{-}O\text{-}[CO\text{-}R^3\text{-}CO\text{-}(R^4\text{-}O)_n]_o\text{-}[CO\text{-}R^3\text{-}CO\text{-}R^5\text{-}O]_p$$
$$\text{-}CO\text{-}R^3\text{-}CO\text{-}O\text{-}(R^6\text{-}O)_q\text{-}R^7 \quad (I),$$

dans laquelle

| | |
|---|---|
| $R^1$ et $R^7$ | représentent chacun un hydrogène ou un radical alkyle en $C_1$ à $C_{18}$, |
| $R^2$, $R^4$, $R^5$ et $R^6$ | représentent chacun un radical alkylène en $C_2$ à $C_4$, |
| $R^3$ | représente un radical o-, m- ou p-phénylène, |
| m et q | représentent chacun des valeurs entières de 3 à 500, |
| n | représente des valeurs entières de 10 à 140, |
| o | représente des valeurs entières de 0 à 12 et |
| p | représente des valeurs entières de 7 à 40. |

**2.** Compositions antimousses selon la revendication 1, dans lesquelles l'organopolysiloxane (A) est constitué de motifs de formules générales (II) à (VIII)

$$R_3SiO_{1/2} \quad \text{(II)},$$

$$R_2SiO \quad \text{(III)},$$

$$RSiO_{3/2} \quad \text{(IV)},$$

$$SiO_{4/2} \quad \text{(V)},$$

$$R_2(R'O)SiO_{1/2} \quad \text{(VI)},$$

$$R(R'O)SiO \quad \text{(VII)},$$

$$R'ORSiO_{3/2} \quad \text{(VIII)},$$

dans lesquelles

R représente des radicaux hydrocarbonés monovalents ayant de 1 à 18 atomes de carbone et éventuellement substitués par des atomes d'halogène, des groupes cyano, amino, alkylamino, ammonium quaternaire, mercapto, époxy, anhydride, carboxylato, sulfonato, sulfato, phosphonato, isocyanato ou polyoxyalkylène et

R' représente des radicaux hydrocarbonés monovalents ayant de 1 à 30 atomes de carbone et éventuellement substitués par des atomes d'halogène, des groupes cyano, amino, alkylamino, ammonium quaternaire, mercapto, époxy, anhydride, carboxylato, sulfonato, sulfato, phosphonato, isocyanato ou polyoxyalkylène, et des atomes d'hydrogène.

**3.** Compositions antimousses selon la revendication 1 ou 2, dans lesquelles l'organopolysiloxane (A) comprend de 0,5 à 40% en poids de résines d'organopolysiloxane (A2) qui sont constituées d'au moins 90% en moles de motifs de formules générales (II), (IV), (V) et (VI).

**4.** Poudres ou granulés comprenant des supports solides pulvérulents (F) et les compositions antimousses selon les revendications 1 à 3.

**5.** Compositions détergentes et de nettoyage comprenant les compositions antimousses selon les revendications 1 à 4.